# NEUE EUROPÄISCHE PATENTSCHRIFT

(11) **EP 1 891 859 B2**
(45) Veröffentlichungstag und Bekanntmachung des Hinweises auf die Entscheidung über den Einspruch: **12.06.2019**
(45) Hinweis auf die Patenterteilung: 27.07.2011
(21) Anmeldenummer: 07015072.7
(22) Anmeldetag: 01.08.2007
(51) Int. Cl.: A22C 15/00, B65G 47/61

(54) **Übergabevorrichtung für an Halteschlaufen hängende Verpackungseinheiten**
Transfer device for packaging units hanging from loops
Dispositif de transmission pour unités d'emballage suspendues par des sangles

(30) Priorität: 22.08.2006 CH 13352006
(43) Veröffentlichungstag der Anmeldung: 27.02.2008
(73) Patentinhaber: Tipper Tie Alpina GmbH, 9230 Flawil (CH)
(72) Erfinder: Lapadatovic, Miljan, 9100 Herisau (CH)
(74) Vertreter: Schalch, Rainer

(56) Entgegenhaltungen:
- EP-A- 0 424 675
- EP-A- 1 498 369
- WO-A1-92/03929
- DE-A1- 19 922 343
- DE-U1-202006 019 883
- US-B1- 6 419 077

## Beschreibung

Die Erfindung betrifft eine Übergabevorrichtung gemäss dem Oberbegriff von Anspruch 1. Ferner betrifft die Erfindung eine Anordnung aus einer solche Übergabevorrichtung und einer Fangvorrichtung für Verpackungseinheiten mit Halteschlaufen.

Es ist bekannt, Würste, an die beim Setzen des einen Verschlussclips eine Halteschlaufe befestigt worden ist, hängend an einem stabförmigen Element von der Verschliessmaschine (Clipmaschine) wegzufördern, so z.B. aus DE-OS 3437830 und DE-PS 3806467. Die an dem Element, das auch als Schwert bezeichnet wird, hängenden Würste sollen für die spätere Weiterverarbeitung an sogenannte Rauchstecken oder Rauchstangen gehängt werden, mit denen die Würste dann zur Weiterverarbeitung, insbesondere zu einem Räuchervorgang, transportiert werden. EP-A 377 090 schlägt vor, die Würste vom Schwert auf das Obertrum einer Kette abzugeben. Der Kettenführungsrahmen ist um 180 deg. schwenkbar, um die Würste an eine Rauchstange weiterzugeben. DE-B 10340632 zeigt das Fördern der Würste mittels einer Förderschnecke und von dieser die Abgabe an eine geneigt angeordnete und drehende Rauchstange, an der die Würste weitergefördert werden. DE-A 199 22 343 zeigt eine gattungsgemässe Übergabevorrichtung.

Der Erfindung liegt die Aufgabe zu Grunde eine verbesserte Übergabevorrichtung für die Verpackungseinheiten von einem ersten stabförmigen Element (Schwert) an ein zweites stabförmiges Element (Rauchstange) zu schaffen.

Diese Aufgabe wird mit den Merkmalen des Anspruchs 1 gelöst.

Dadurch, dass ein Auslösemittel steuerbar an wählbaren Positionen ein Loslassen der Verpackungseinheiten bzw. Würste durch die Erfassungsmittel bewirkt, kann ein definiertes Absetzen der Verpackungseinheiten auf dem zweiten Element erfolgen. Dies lässt sich somit nach Wunsch und optimal beladen. Insbesondere lässt sich der Abstand der Verpackungseinheiten voneinander auf dem zweiten Element auf einfache Weise bestimmen. Die Übergabevorrichtung ist unabhängig von Form und Grösse der Rauchstecken einsetzbar und eignet sich somit für Rauchstecken verschiedener Hersteller. Das Auslösemittel ist ein Auslöseblock, der entgegen der Förderrichtung verfahrbar ist und so auf durch die Steuerung bestimmte Weise auf die Haken zu deren Auslösung zum Loslassen trifft. Dies ermöglicht eine praktisch stufenlose Positionierung der Verpackungseinheiten entlang des zweiten Elementes

Die Erfassungsmittel sind an einem umlaufenden Fördermittel zur Förderung der Erfassungsmittel vorgesehen. Bevorzugt sind die Erfassungsmittel als Greifmittel und insbesondere als an dem umlaufenden Fördermittel, wie einer Kette oder einem Zahnriemen, angeordnete Haken vorgesehen. Damit können die Verpackungseinheiten einzeln gegriffen und über die Rauchstange bzw. das zweite Element gefördert werden. Dort wirkt dann das steuerbare, positionierbare Auslösemittel zum Lösen des Griffes der Greifmittel. Dies erfolgt vorzugsweise, indem die Haken schwenkbar sind, was durch das Auslösemittel bewirkt wird. Durch die Schwenkbewegung der Haken gleiten die Halteschlaufen von diesen ab oder werden abgestreift und die Verpackungseinheit wird an der vom Auslösemittel bestimmten Position abgesetzt.

Die Anordnung aus der Übergabevorrichtung gemäss der Erfindung und der die Verpackungseinheiten bzw. Würste am Ausgang der Verschliessvorrichtung fangenden Fangvorrichtung ergibt ein einfaches automatisiertes Aufbringen der Verpackungseinheiten auf Rauchstecken.

Im folgenden werden Ausführungsbeispiele der Erfindung anhand der Figuren näher erläutert. Dabei zeigt
Figur 1 eine Seitenansicht einer Übergabevorrichtung gemäss einem Ausführungsbeispiel der Erfindung;
Figur 2 eine Ansicht von oben auf ein erstes stabförmiges Element (Schwert), von welchem die hängenden Verpackungseinheiten mittels der Übergabevorrichtung abgegriffen werden;
Figur 3 eine Detailansicht der Greifmittel und des Auslösemittels;
Figur 4 eine Frontalansicht der Übergabevorrichtung von Figur 1; und
Figur 5 eine Seitenansicht einer Verschliessvorrichtung und eines Teils der Fangvorrichtung einer Anordnung aus diesen Vorrichtungen und einer Übergabevorrichtung.

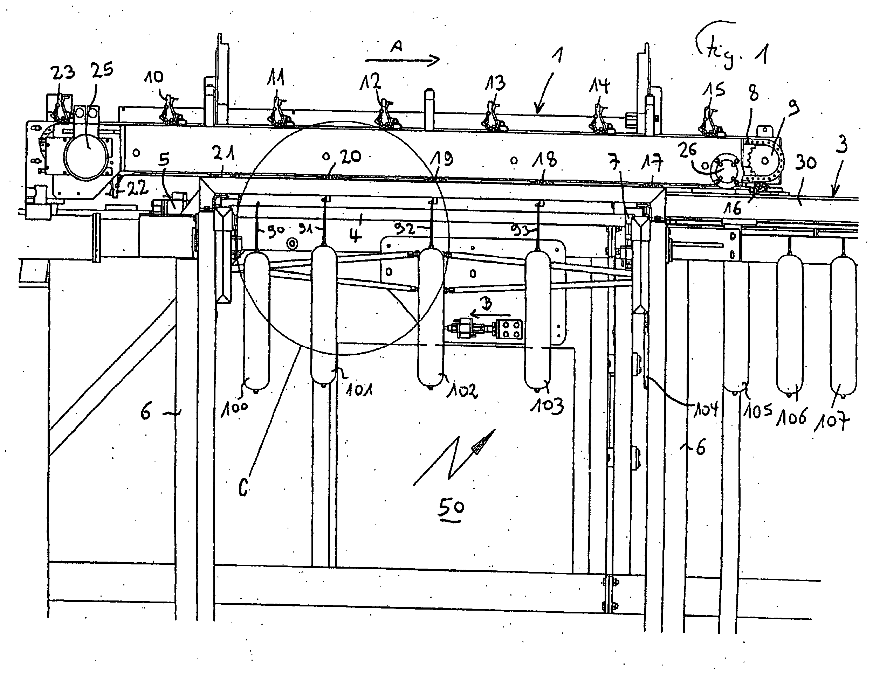

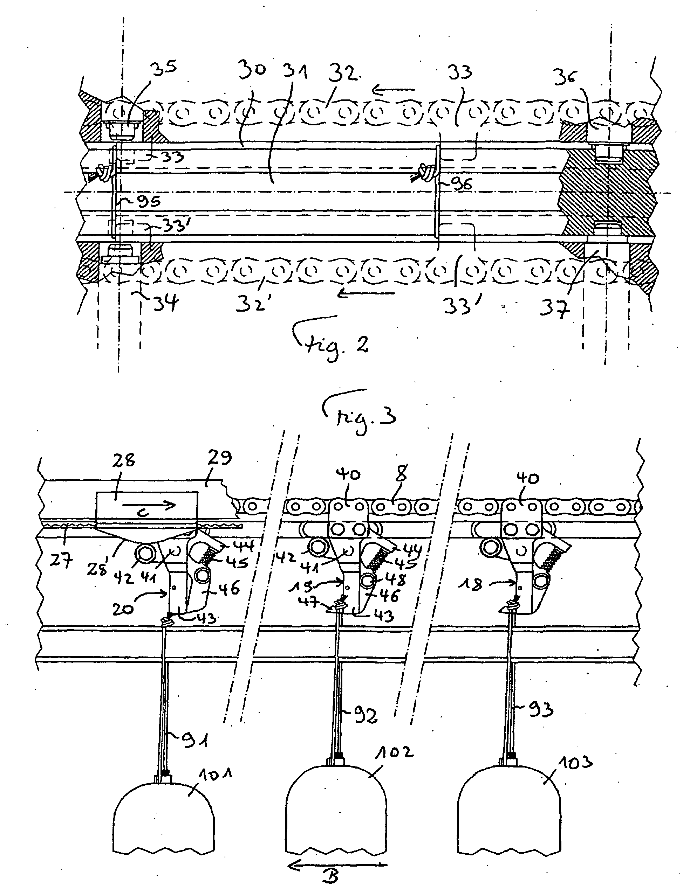

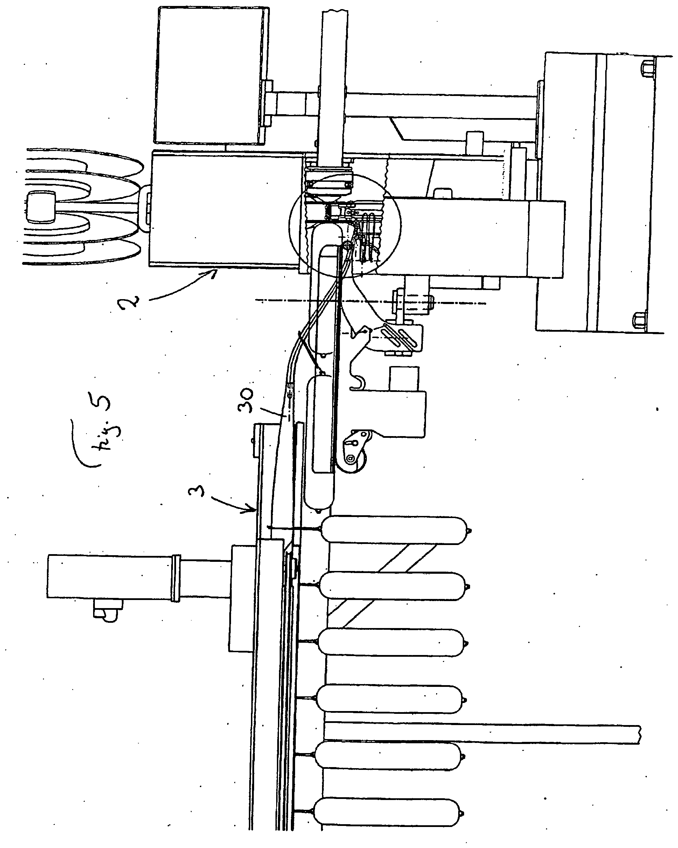

Figur 1 zeigt eine Übergabevorrichtung 1 in Seitenansicht. Dieser werden an Halteschlaufen hängende Verpackungseinheiten von einer Fangvorrichtung 3 her zugeführt, welche diese Verpackungseinheiten von einer Verschliessvorrichtung übernommen hat, welche in Figur 5 dargestellt ist, was noch erläutert wird. Die Fangvorrichtung 3 fördert die Verpackungseinheiten, welche in dem gezeigten Beispiel Würste sind, welche aber auch andere Gegenstände sein können, entlang eines zweiten stabförmigen Elementes 30, das auch als Schwert bezeichnet wird, und welches ebenfalls in Figur 5 in Seitenansicht ersichtlich ist sowie in Figur 2 in Draufsicht. Die Übergabevorrichtung 1 erfasst, und insbesondere greift die Verpackungseinheiten im Endbereich des Schwertes, in welchem dieses an die Übergabevorrichtung 1 anschliesst. Die Übergabevorrichtung 1 ist zur lösbaren Halterung eines ersten stabförmigen Elementes 4, welches in der Regel ein Rauchstecken ist, wenn es sich bei den Verpackungseinheiten um Würste handelt, ausgestaltet. Die Übergabevorrichtung übergibt die am Schwert 30 hängenden Verpackungseinheiten an den Rauchstecken 4. Dieser wird in der Übergabevorrichtung 1 so gehalten, dass er im Wesentlichen koaxial mit dem Schwert 30 der Fangvorrichtung angeordnet und gehalten werden kann.

Im dargestellten Beispiel von Figur 1 sind die Erfassungsmittel der Übergabevorrichtung 1 zum Greifen der Halteschlaufen am zweiten stabförmigen Element bzw. am Schwert 30 als Haken 10-23 ausgeführt, welche an einem umlaufenden Fördermittel befestigt sind, welches im gezeigten Beispiel eine Kette 8 ist, die am einen Ende der Übergabevorrichtung, welches der Fangvorrichtung 3 benachbart ist um ein Kettenrad 9 umgelenkt wird. Am anderen Ende der Übergabevorrichtung läuft die Kette ebenfalls um ein Kettenrad, welches von einem steuerbaren Antrieb 25 angetrieben wird. Die nur schematisch dargestellte Steuerung 50 ist entsprechend mit Steuerleitungen mit dem Antrieb 25 verbunden. Dieser Antrieb ist z.B. ein elektromotorischer Antrieb mit einem Servomotor. Die Greifmittel 10-23 laufen mit der Kette 8 in Richtung des Pfeiles A und werden im Bereich des Endes der Fangvorrichtung 3 umgelenkt. Bei der gezeigten Ausführungsform erfolgt das Greifen der Halteschlaufen der Verpackungseinheiten derart, dass die hakenförmigen Greifmittel nach der Umlenkung in eine oberseitige Nut 31 des Schwertes 30 eintauchen, über welche Nut sich die Halteschlaufe spannt.

In Figur 2 ist eine Draufsicht auf einen Teil des Schwertes 30 mit der Nut 31 sowie mit Halteschlaufen 96 und 95 gezeigt, welche die Nut 31 überspannen. Mit dem Eintauchen eines der hakenförmigen Greifmittel in die Nut 31 und einer schnelleren Bewegung des Greifmittels als es der Fördergeschwindigkeit der Halteschlaufen bzw. Verpackungseinheiten entlang des Schwertes entspricht, kann somit jeweils eine Halteschlaufe von dem Haken gegriffen und dadurch durch das Greifmittel übernommen werden. Figur 2 zeigt die Förderung der Halteschlaufen 95 und 96 am Schwert mittels Förderlaschen 33, 33', welche in seitliche Nuten des Schwertes 30 eingreifen und damit jeweils die Halteschlaufe mit der Geschwindigkeit der Ketten 32 und 32' fördern, an welchen die Förderlaschen 33 und 33' befestigt sind. Damit die Halteschlaufen über das Schwert gefördert werden könne, ist dieses fliegend mittels mehreren Paaren von Haltebolzen gehalten, welche jeweils beim Passieren einer Halteschlaufe vom Schwert zurückgezogen werden, wobei in dieser Zeit das Halten des Schwertes durch andere Haltebolzenpaare übernommen wird. Dies ist grundsätzlich bekannt. In der Figur 2 sind dazu als Beispiel lediglich die Haltebolzenpaare 34, 35 sowie 36, 37 dargestellt. Sobald ein hakenförmiges Greifmittel die Halteschlaufe gegriffen hat, wird sie durch das etwas schneller als die Ketten 32, 32' der Fangvorrichtung 3 laufende Greifmittel bis zum Ende des Schwertes weitergefördert und ab dort nur noch am Haken hängend weitergefördert. In Figur 1 ist ersichtlich, wie am Ende der Fangvorrichtung 3 einzelne Würste 107, 106 und 105 in Pfeilrichtung B gefördert werden, wobei die Würste 107 und 106 mit ihren Halteschlaufen 96 und 95 noch am Schwert hängen und noch durch die Förderlaschen 33, 33' gefördert werden. Die Wurst 105 mit ihrer in der Figur nicht ersichtlichen Halteschlaufe wird nächstens durch das bereits umgelenkte Greifmittel 16 ergriffen und entsprechend durch dieses bis zum Ende des Schwertes gefördert. Die Ketten 32, 32' der Fangvorrichtung sind vorher umgelenkt worden und haben die Förderung entlang des Schwertes 30 an dieser Stelle schon beendet. Ganz am Ende des Schwertes befindlich ist ein vorher umgelenktes Greifmittel 17, an welchem die nur teilweise ersichtliche Wurst 104 hängt. Die Greifmittel 18, 19 und 20, an welchen jeweils die Würste 103, 102 und 101 mittels der Halteschlaufen 93, 92 und 91 gehalten sind fördern diese in Richtung des Pfeiles B über den Rauchstecken 4. Da der Rauchstecken im Wesentlichen koaxial mit dem Schwert angeordnet ist, umfassen die Halteschlaufen, welche vorgängig das Schwert umfasst haben, nun den Rauchstecken 4. Die vorderste Verpackungseinheit 100 mit der Halteschlaufe 90 ist bereits vom Greifmittel 21 losgelassen worden, so dass die Verpackungseinheit nun hängend am Rauchstecken und von diesem gehalten angeordnet und positioniert ist. Das gezeigte Beispiel mit dem kontinuierlich umlaufenden Fördermittel mit den daran angeordneten Greifmitteln ist als bevorzugtes Beispiel zu verstehen. Es können auch anders ausgestaltete und bewegte Erfassungsmittel vorgesehen sein, z.B. solche, welche bis zum Ende des Schwertes durch die Fangvorrichtung geförderte Verpackungseinheiten beim Abfallen derselben vom Schwert in ihren Halteschlaufen auffangen, z.B. mit Haken oder Stiften, und diese wiederum durch gemeinsame synchrone Förderung oder auch durch einzelne, asynchrone Förderung entlang des Rauchsteckens fördern.

Figur 3 zeigt nun eine Detailansicht der Greifmittel, die als Haken ausgebildet sind und deren Auslösung durch ein Auslösemittel zum Loslassen der jeweiligen Halteschlaufe. In Figur 3 ist wieder die Kette 8 ersichtlich, an welcher die Greifmittel 18, 19 und 20 durch Befestigungsmittel 40 fest angeordnet sind. Das einzelne Greifmittel ist in diesem bevorzugten Beispiel als Haken ausgeführt, welcher ein schwenkbares Hakenteil aufweist, das aus seiner Greifstellung zum Greifen der Halteschlaufen in eine Loslassstellung bewegbar ist. Der einzelne Haken weist in diesem Beispiel ein feststehendes Hakenteil 43 auf, das an der Lasche 40 befestigt ist. Feststehend ist ebenfalls das Abstützteil 44 für ein Federmittel 45, im gezeigten Beispiel eine Druckfeder. Ein schwenkbares Hakenteil 46 mit dem Hakenende 47 ist um eine Achse 41 am feststehenden Hakenteil 43 schwenkbar befestigt. Am schwenkbaren Hakenteil 46 ist weiter ein Löseteil 42 angeordnet. Dies kann z.B. ein feststehendes Element oder eine drehbare Rolle sein. Die Greifmittel 18 und 19 sind in Figur 3 in Greifstellung gezeigt. In dieser Stellung sind sie vorgängig in die Nut 31 des Schwertes 30 eingetaucht und haben die jeweilige Halteschlaufe 93 bzw. 92 der Wurst 103 bzw. 102 an dem die Nut 30 überspannenden Halteschlaufenteil gegriffen. Die Würste 102 und 103 hängen somit an den Greifmitteln 18 und 19 während gleichzeitig der Rauchstecken 4 die Halteschlaufe durchsetzt. Durch das Fördermittel bzw. die Kette 8 werden die Würste in Richtung des Pfeiles B gefördert. Anhand des Greifmittels 20 wird nun das Loslassen einer Verpackungseinheit gezeigt. Dazu wird das bewegliche, schwenkbare Hakenteil 46 entgegen der Kraft der Druckfeder 45 geschwenkt, so dass die Hakenspitze 47 sich hinter das feststehende Hakenteil zurückzieht und die Halteschlaufe von der Hakenspitze 47 abgestreift wird. Diese Lösung mit der Abstreifung ist ein bevorzugtes Beispiel. Der Haken könnte auch soweit geschwenkt werden, dass die Halteschlaufe lediglich durch die Schrägstellung der Hakenspitze von selber von dieser abrutscht und somit auf den Rauchstecken 4 gelangt. Das Schwenken des beweglichen Hakenteils 46 wird durch ein Auslösemittel bewirkt. Dieses Auslösemittel ist im gezeigten Beispiel ein Auslöseblock 28 mit einer Steuerkurve 28', durch welche das jeweilige Löseteil 42 beaufschlagbar ist, um die Schwenkbewegung des beweglichen Hakenteils 46 um die Schwenkachse 41 bewirken. Der Auslöseblock 28 ist dabei z.B. in einer Schiene 29 geführt und wird durch ein Fördermittel 27 in Richtung des Pfeiles C angetrieben. Das Auslösemittel läuft somit dem Fördermittel der Greifmittel entgegengesetzt und trifft damit auf seinem Weg von der dem Schwert abgewandten Ende des Rauchsteckens zu dem schwertseitigen Ende des Rauchsteckens nach und nach auf alle durch die Greifmittel geförderten Verpackungseinheiten. Durch die Steuerung des angetrieben bewegten Auslösemittels kann somit bestimmt werden, an welcher Position entlang des Rauchsteckens die Greifmittel die Verpackungseinheiten loslassen. Zum gesteuerten Antrieb des Auslösemittels kann ein Motor 26 (Figur 1) vorgesehen sein, welcher den Zahnriemen 27 antreibt. Der Motor 26 ist ebenfalls mit der Steuerung 50 verbunden, welche somit bestimmen kann, an welcher Position eine einzelne Verpackungseinheit abgesetzt bzw. losgelassen wird. Das Auslösemittel kann in einer nicht erfindungsgemässen Ausführung anders ausgeführt werden, als in dem bevorzugten Beispiel gezeigt. So könnten eine Vielzahl von fest positionierten Auslösemitteln vorgesehen sein, welche einzeln ansteuerbar sind, um auf ein Löseteil der Greifmittel einzuwirken. Solche einzelnen Auslösemittel könnten z.B. elektromagnetisch oder pneumatisch betätigt werden. Auch auf diese Weise kann das Loslassen und Positionieren bewirkt werden, wobei in diesem Fall die Position nicht stufenlos durch Verfahren des Auslöseblockes gewählt werden kann, sondern fix durch die Anordnung der einzelnen Auslösemittel gegeben ist. Der Auslöseblock kann zurück in seine Ausgangsstellung laufen, sobald alle Würste auf dem Rauchstecken 4 abgesetzt sind.

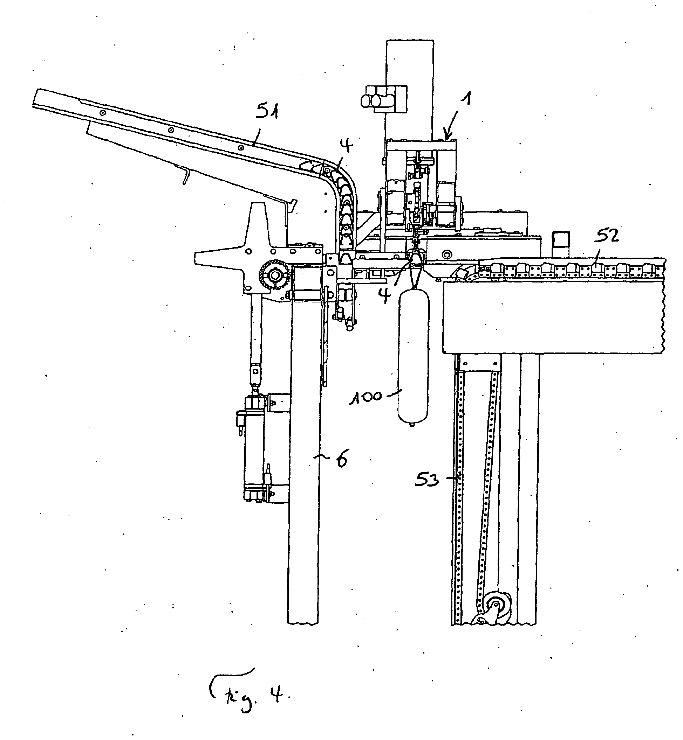

Figur 4 zeigt eine stirnseitige Ansicht der bereits beschriebenen Übergabevorrichtung 1. Ersichtlich ist wiederum der Rauchstecken 4, der in der Übergabevorrichtung lösbar gehalten ist. Zu dieser Halterung kann ein erstes stirnseitiges Halteteil 7 und ein zweites stirnseitiges Halteteil vorgesehen sein (Figur 1) wobei mindestens eines der Halteteile, in Figur 1 das Halteteil 5, angetrieben ist, z.B. pneumatisch angetrieben ist, um eine lösbare Halterung des Rauchsteckens zu bewirken. Sobald ein Rauchstecken 4 befüllt ist, so wird er weggeführt und durch einen leeren Rauchstecken ersetzt, welcher wiederum durch die Übergabevorrichtung 1 mit Würsten befüllt wird. In Figur 4 ist eine Fördereinrichtung 52 dargestellt, welche über eine Kette 53 von einem nicht auf der Zeichnung ersichtlichen Antrieb angetrieben ist, die die einzelnen Rauchstecken 4 von der Übergabevorrichtung wegführt. Mit 50 ist ein Rauchsteckenmagazin bezeichnet, aus welchem ein weiterer, leerer Rauchstecken wieder in die Haltestellung in der Übergabevorrichtung 1 gebracht werden kann. Die Übergabevorrichtung ist vorzugsweise als selbststehende Einheit mit einem Gestell 6 ausgerüstet, mittels welchem sie am Ende der Fangvorrichtung 3 angeordnet werden kann.

Auf diese Weise wird eine Anordnung aus Übergabevorrichtung 1, Fangvorrichtung 3 sowie einer Verschliessmaschine 2 für die wurstförmigen Verpackungen gebildet, wie dies in den Figuren 1 und 5 dargestellt ist. Die Verschliessvorrichtung 2 ist dabei eine bekannte Verschliessvorrichtung, welche Verschlussclips an den wurstförmigen Verpackungseinheiten setzt. Dabei wird auch die Halteschlaufe an der jeweiligen Verpackungseinheit befestigt. Die Fangvorrichtung 3 mit dem Schwert 30 übernimmt die einzelnen Halteschlaufen und damit die Verpackungseinheiten und transportiert diese entlang des Schwertes 30 auf die beschriebene Weise oder auf eine andere Art. Danach schliesst sich die im Detail beschriebene Übergabevorrichtung 1 an. Vorzugsweise ist eine Steuerung 50 vorgesehen, die z.B. die Steuerung der Verschliessmaschine 2 ist, die alle Antriebe der Verschliessvorrichtung, der Fangvorrichtung und der Übergabevorrichtung synchronisiert steuert, wenigstens aber die Antriebe der Fangvorrichtung und der Übergabevorrichtung. Es können auch einzelne Steuerungen bei den Vorrichtungen vorhanden sein, die miteinander synchronisiert sind.

## Patentansprüche

1. Übergabevorrichtung (1), welche zur Übergabe von an einem ersten stabförmigen Element (30) mittels Halteschlaufen (90-96) hängend angeordneten Verpackungseinheiten an ein zweites stabförmiges Element (4) ausgestaltet ist, wobei Erfassungsmittel (10-23) vorgesehen sind, durch welche die Halteschlaufen erfassbar und über das zweite stabförmige Element förderbar sind, wobei ein umlaufendes Fördermittel (8), insbesondere eine Kette oder ein Zahnriemen, zur Förderung der Erfassungsmittel (10-23) vorgesehen ist sowie ein Auslösemittel (27,28) vorgesehen ist, um das jeweilige Erfassungsmittel zum Loslassen der Halteschlaufe zu bewegen, **dadurch gekennzeichnet, dass** durch das Auslösemittel steuerbar bei wählbaren Positionen entlang des Förderweges auf die Erfassungsmittel einwirkbar ist, wobei das Auslösemittel durch ein entgegen der Förderrichtung entlang des Fördermittels verfahrbaren Auslöseblock (28) gebildet ist, der an einem antreibbaren weiteren Fördermittel, insbesondere einem Zahnriemen (27), befestigt ist, und dass die Übergabevorrichtung Aufnahmemittel (5,7) für das lösbare Halten des zweiten stabförmigen Elementes (4) aufweist und zu dem ersten stabförmigen Element (30) derart anordenbar ist, dass dieses und ein in den Aufnahmemitteln gehaltenes zweites stabförmiges Element (4) im Wesentlichen koaxial zu liegen kommen.

2. Übergabevorrichtung nach Anspruch 1, **dadurch gekennzeichnet, dass** die Erfassungsmittel als Greifmittel ausgestaltet sind, und dass die Greifmittel insbesondere von um eine Schwenkachse (41) schwenkbaren Haken (46,47) gebildet werden, die durch ein Federmittel (45) in eine Greifstellung vorgespannt und die durch Druck auf ein Löseteil (42) entgegen der Federkraft in die Loslassstellung schwenkbar sind.

3. Übergabevorrichtung nach Anspruch 2, **dadurch gekennzeichnet, dass** der Auslöseblock eine Steuerkurve (28') aufweist, mit der auf das Löseteil einwirkbar ist.

4. Übergabevorrichtung nach einem der Ansprüche 1 bis 3, **dadurch gekennzeichnet, dass** diese eine Steuerung aufweist, durch die die Förderung und das Auslösemittel steuerbar sind.

5. Anordnung umfassend ein erstes stabförmiges Element (30), welches ein Schwert einer Fangvorrichtung (3) ist, die mit Halteschlaufen versehene Verpackungseinheiten am Ausgang einer Verschliessvorrichtung (2) fängt und an den Halteschlaufen hängend entlang des Schwertes transportiert, und eine Übergabevorrichtung (1) nach einem der Ansprüche 1 bis 4, welche die Verpackungseinheiten im Endbereich des Schwertes greift.

6. Anordnung nach Anspruch 5, **dadurch gekennzeichnet, dass** das Schwert eine oberseitig offene Längsnut (31) aufweist, die von den Halteschlaufen (24) überspannbar ist und in welche die als Greifmittel ausgestalteten Erfassungsmittel eingreifen.

## Claims

1. Transfer device (1), adapted for transferring packaging units arranged in a hanging way at a first rod-shaped element (30) by means of retaining loops (90-96) to a second rod-shaped element (4), wherein collecting means (10-23) are provided, by means of which the retaining loops are retainable and conveyable along the second rod-shaped element, wherein a revolving conveying means (8), particularly a chain or a tooth belt, is provided for conveying the collecting means (10-23) as well as a triggering means (27, 28) is provided in order to trigger the respective collecting means to release the retaining loop, **characterized in that** it can be acted upon the collecting means in a controllable way and at selectable positions along the conveying path by means of the triggering means, wherein the triggering means is formed by a triggering block (28) which is movable along the conveying means against the conveying direction and which is attached to a further driveable conveying means, particularly a tooth belt, and **in that** the transfer device has receiving means (5, 7) for detachably holding the second rod-shaped element (4) and is attachable to the first rod-shaped element (30) in such a way that the latter and a second rod-shaped element (4) which is held in the receiving means come to lie substantially coaxially.

2. Transfer device according to claim 1, **characterized in that** the collecting means are formed as grabbing means and that the grabbing means are particularly formed by hooks (46, 47) which are pivotable around a pivoting axis (41) and prestressed in a grabbing position by means of spring means (45) and which are pivotable into the release position against the spring force by means of pressure on a releasing member (42).

3. Transfer device according to claim 2, **characterized in that** the triggering block has a control cam (28') by means of which it may be acted upon the releasing member.

4. Transfer device according to one of the claims 1 to 3, **characterized in that** it has a controller by means of which the conveying and the triggering means are controllable.

5. Arrangement comprising a first rod-shaped element (30) which is a blade of a catching device (3) catching packaging units having retaining loops at the exit of a sealing device (2) and transporting them hanging at the retaining loops along the blade, and a transfer device (1) according to one of the claims 1 to 4, which grabs the packaging units in the end section of the blade.

6. Arrangement according to claim 5, **characterized in that** the blade has a longitudinal groove (31) which is open on the upper side, which may be spanned by the retaining loops (24) and inside of which the collecting means, which are formed as grabbing means, engage.

## Revendications

1. Dispositif de transfert (1), qui est équipé pour le transfert d'unités d'emballage disposées de façon suspendue à un premier élément (30) en forme de barre au moyen de boucles de retenue (90-96) à un second élément en forme de barre (4), des moyens de saisie (10-23) étant prévus, par lesquels les boucles de retenue peuvent être saisies et transportées via le second élément en forme de barre, un moyen de transport (8) tournant, en particulier une chaîne ou une courroie crantée, étant prévu pour le transport des moyens de saisie (10-23), et un moyen de déclenchement (27, 28) étant prévu, pour déplacer le moyen de saisie respectif pour le relâchement de la boucle de retenue, **caractérisé en ce qu'**on peut agir par le moyen de déclenchement de façon contrôlable en cas de positions sélectionnables le long de la course de transport sur les moyens de saisie, le moyen de déclenchement étant formé par un bloc de déclenchement (28) pouvant être déplacé dans le sens contraire au sens de transport le long du moyen de transport, lequel bloc est fixé sur un autre moyen de transport pouvant être entraîné, en particulier une courroie crantée (27), et **en ce que** le dispositif de transfert a des moyens de logement (5, 7) pour la retenue amovible du second élément (4) en forme de barre et peut être placé par rapport au premier élément (30) en forme de barre de telle sorte que cet élément et un second élément (4) en forme de barre, maintenu dans les moyens de logement, viennent se placer sensiblement sur le même axe.

2. Dispositif de transfert selon la revendication 1, **caractérisé en ce que** les moyens de saisie sont conçus sous forme de moyens de préhension, et **en ce que** le moyens de préhension sont formés en particulier par des crochets (46, 47) pouvant basculer autour de l'axe de pivotement (41), qui sont prétendus par un moyen de ressort (45) dans une position de préhension et qui peuvent basculer par pression exercée sur une partie de desserrage (42) dans le sens contraire à la force du ressort dans la position de relâchement.

3. Dispositif de transfert selon la revendication 2, **caractérisé en ce que** le bloc de déclenchement présente une came de commande (28'), avec laquelle on peut agir sur la partie de desserrage.

4. Dispositif de transfert selon l'une quelconque des revendications 1 à 3, **caractérisé en ce que** celui-ci présente une commande par laquelle le transport et le moyen de déclenchement peuvent être commandés.

5. Agencement comprenant un premier élément (30) en forme de barre, qui est une lame d'un dispositif d'interception (3), qui intercepte des unités d'emballage dotées de boucles de retenue à la sortie d'un dispositif de fermeture (2) et les transporte le long de la lame de façon suspendue sur les boucles de retenue, et un dispositif de transfert (1) selon l'une quelconque des revendications 1 à 4, qui saisit les unités d'emballage dans la zone d'extrémité de la lame.

6. Agencement selon la revendication 5, **caractérisé en ce que** la lame présente une rainure longitudinale (31) ouverte côté supérieur, qui peut être recouverte par les boucles de retenue (24) et dans laquelle s'engagent les moyens de saisie conçus comme moyens de préhension.
